# EUROPÄISCHE PATENTSCHRIFT

(11) **EP 2 508 705 B1**
(45) Veröffentlichungstag und Bekanntmachung des Hinweises auf die Patenterteilung: **03.05.2017**
(21) Anmeldenummer: 12159109.3
(22) Anmeldetag: 12.03.2012
(51) Int. Cl.: E06B 9/44, B60J 1/20

(54) **Wickelwelle eines Rollosystems und Rollosystem mit Wickelwelle**
Roller tube and roller system with such tube
Tube d'enroulement et store avec un tel tube

(30) Priorität: 08.04.2011 DE 102011007082
(43) Veröffentlichungstag der Anmeldung: 10.10.2012
(73) Patentinhaber: BOS GmbH & Co. KG, 73760 Ostfildern (DE)
(72) Erfinder: Hintennach, Markus, 73262 Reichenbach (DE)
(74) Vertreter: Patentanwälte Ruff, Wilhelm, Beier, Dauster & Partner mbB

(56) Entgegenhaltungen:
- EP-A2- 1 464 566
- DE-A1- 10 204 331
- DE-A1- 19 625 231
- DE-B3-102007 051 056
- DE-C- 644 744
- DE-U1- 20 011 452
- FR-A1- 2 931 397
- US-A- 1 800 654
- US-A- 4 823 859
- US-A- 5 881 792

## Beschreibung

Die Erfindung betrifft ein Rollosystem nach dem Oberbegriff des Anspruchs 1. Die Erfindung betrifft zudem ein Fahrzeug mit einem solchen Rollosystem.
Wickelwellen sind aus dem Stand der Technik bekannt, siehe hierzu beispielsweise US 1 800 654 A, EP 1 464 566 B1, DE 102 04 331 A1, DE 644 744 C, US 4 823 859 A und FR 2 931 397 A1. Sie werden bei Rollosystemen in Kraftfahrzeugen verwendet, bei denen gewünscht ist, dass das auf der Wickelwelle in einem Stauzustand aufgenommene Flächengebilde nicht geradlinig von der Wickelwelle abgerollt wird, sondern hierbei eine leicht gekrümmte Bewegungsrichtung beschreibt. Solche Wickelwellen sind an ihrer Außenseite konusabschnittsförmig geformt, wobei üblicherweise Öffnungswinkel von weniger als 10° Verwendung finden.

Die Herstellung von Wickelwellen stellt bislang ein nicht zufriedenstellend gelöstes Problem dar. Der Fertigungsaufwand für einen konisch aufgeweiteten Kunststoffkörper ist vergleichsweise hoch und deren Stabilität ist nicht zufriedenstellend. Stattdessen finden daher zumeist zylindrische Grundkörper Anwendung, auf die ein Flächegebilde flächig aufgeklebt wird, welches durch eine in etwa dreieckige Formgebung im aufgeklebten Zustand der Wickelwelle eine in etwa konische Form erhält. Auch ist es bekannt, zylindrische Hohlwellen als Grundkörper zu verwenden, die mit Kunststoff umspritzt werden, um die konische bzw. konischabschnittsförmige Formgebung zu erzielen.

Aufgabe der Erfindung ist es, ein Rollosystem der eingangs genannten Art zu schaffen, dessen Wickelwelle hinsichtlich des Herstellungsaufwandes und ihrer Funktionseigenschaften gegenüber dem Stand der Technik verbessert ist.

Diese Aufgabe wird durch die Merkmale des Anspruchs 1 gelöst.

Es hat sich gezeigt, dass mit geeigneten Fertigungsmethoden die unmittelbare Herstellung des konusabschnittsförmigen Hauptkörpers als Metallhohlteil gut handhabbar ist und zudem zu überlegenen Eigenschaften der Wickelwelle im Hinblick auf ihr Schwingungsverhalten und ihre Steifigkeit führt. Eine Wickelwelle des erfindungsgemäßen Rollosystems verfügt somit über ein derartiges konusabschnittsförmiges Metallhohlteil, welches vorzugsweise selbst mit seiner Außenfläche jene Fläche zur Verfügung stellt, auf der unmittelbar die unterste Lage des Flächengebildes aufgewickelt wird.

Erfindungsgemäß weist nicht nur der Außendurchmesser dieses metallischen Hauptkörpers eine Konusabschnittsform auf, sondern auch dessen Innenfläche. Hierdurch wird gegenüber einer Wickelwelle mit zylindrischer Innenfläche eine verringerte Masse erreicht. Erfindungsgemäß sind die Konizität der Außenfläche und der Innenfläche der Wickelwelle derart ausgebildet, dass sich die Wandungsstärke des Hauptkörpers entlang der Richtung der Wickelwellenachse verändert. Es hat sich gezeigt, dass eine solche variable Wandungsstärke des Hauptkörpers eine vorteilhafte Möglichkeit darstellt, um dem Hauptkörper gezielt eine erhöhte Stabilität und ein verbessertes Schwingungsverhalten verleihen zu können. Dabei ist es erfindungsgemäß vorgesehen, dass die Wandungsstärke sich von einem ersten Ende des Hauptkörpers mit größerem Außendurchmesser hin zu einem zweiten Ende des Hauptkörpers mit geringerem Durchmesser vergrößert. Hierdurch wird eine ausgeglichenere Massenverteilung der Wickelwelle erzielt. Außerdem wird die Verwindungssteifigkeit im Bereich mit geringerem Außendurchmesser vergrößert.

Zur Erzielung einer geringen Masse, ist es von Vorteil, wenn der Hauptkörper aus Aluminium oder einer Aluminiumlegierung besteht.

Von Vorteil ist es jedoch, wenn die konusabschnittsförmige Formgebung des Hauptkörpers ausgehend von einem zylindrischen Metallrohr mittels eines Umformverfahrens erzeugt ist, insbesondere vorzugsweise mittels eines Warmumformverfahrens und/oder vorzugsweise durch in Richtung auf eine Mittelachse des Metallrohrs ausgeführte Schläge mit einem Hammer.

Diese Form der Herstellung der Wickelwelle bzw. ihres Hauptkörpers ist wirtschaftlich bei der Massenfertigung von Wickelwellen von erheblichem Vorteil. Die spanenden Fertigungsschritte werden hierdurch vermieden oder auf ein geringes Maß reduziert. Den Hauptschritt der Bearbeitung macht das Umformen des ursprünglich zylindrischen Metallrohres aus, welches vorzugsweise bei Durchführung einer Drehbewegung des Metallrohrs radial mit Hammerschlägen beaufschlagt wird, die zu einer Verringerung des Außendurchmessers des Metallrohrs führen. Von besonderem Vorteil ist hierbei auch, dass sich die gewünschte vergrößerte Wandungsstärke im Bereich mit geringerem Außendurchmesser so bereits ohne das Vorsehen eines hierfür erforderlichen weiteren Schrittes einstellt. In jenen Bereichen, in denen der Außendurchmesser durch radiale Schläge stark verringert ist, ist auch die Wandungsstärke vergrößert. Unter der Annahme, dass die zum Umformen ausgeführten Schläge nur eine unerhebliche Längung des Hauptkörpers zur Folge haben, wird sogar eine weitgehend einheitliche Massenverteilung des Hauptkörpers entlang der Wickelwelle erreicht.

Von besonderem Vorteil ist es, wenn innerhalb der Wickelwelle eine Wickelfeder aufgenommen ist, wobei diese Wickelfeder gegenüber einer Mitte der Wickelwelle hin zu der Seite mit größerem Außendurchmesser versetzt angeordnet ist.

Bei dieser Ausgestaltung wird die Tatsache genutzt, dass in dem Bereich mit größerem Außendurchmesser auch der Innendurchmesser einer erfindungsgemäßen Wickelwelle üblicherweise größer ist, so dass hier der erforderliche Raum zur Aufnahme der Wickelfeder vorhanden ist. Die Wickelfeder ist einerseits unmittelbar oder mittelbar mit dem Hauptkörper der Wickelwelle verbunden. Ihr gegenüberliegendes Ende ist zur Anbringung an einem im Betrieb ortsfesten Halteabschnitt des Rollosystems vorgesehen.

Weitere Aspekte und Vorteile der Erfindung ergeben sich außer aus den Ansprüchen auch aus der nachfolgenden Beschreibung eines bevorzugten Ausführungsbeispiels der Erfindung. Dabei zeigen:
- Fig. 1: ein erfindungsgemäßes Rollosystem mit einer erfindungsgemäßen Wickelwelle in einer geschnittenen Darstellung und
- Fig. 2: den Hauptkörper der Wickelwelle des Rollosystems gemäß Fig. 1 in einer separaten Darstellung.

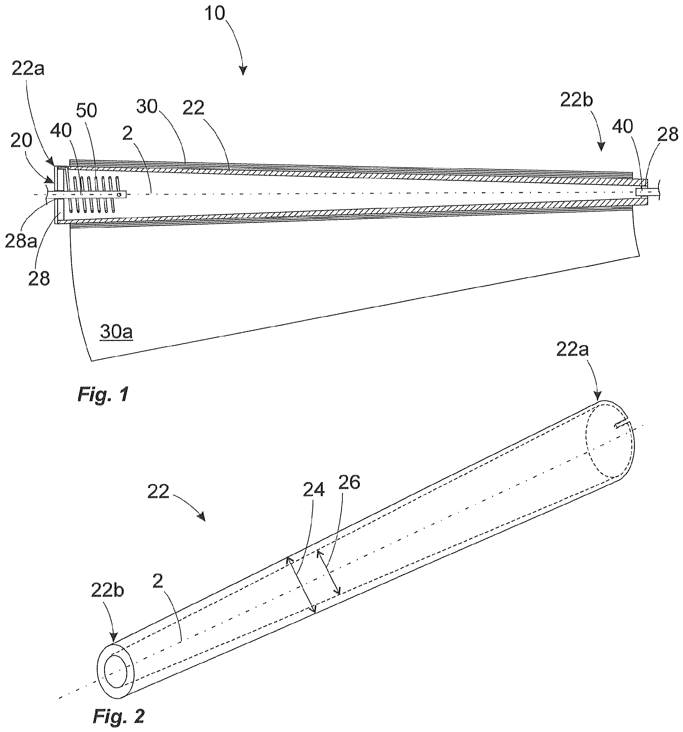

Fig. 1 zeigt ein erfindungsgemäßes Rollosystem 10 mit einer Wickelwelle 20.

Dieses Rollosystem 10 ist zur Verwendung insbesondere im Innenraum eines Fahrzeugs vorgesehen. Aufgrund seiner erfindungsgemäß gegebenen Besonderheit, der konischen Formgebung der Wickelwelle 20, kann es insbesondere bei Beschattungssystemen für Seitenfenster des Fahrzeugs Verwendung finden.
Das Rollosystem 10 weist als Hauptbestandteile eine Wickelwelle 20 mit einem Hauptkörper 22 sowie endseitigen Kappen 28 auf. Auf der Außenseite des Hauptkörpers 22 ist ein Flächengebilde 30 teilweise auf gewickelt. Wie sich anhand des abgewickelten Teilabschnitts 30a des Flächengebildes 30 erkennen lässt, ist dieses nicht rechteckig geformt, sondern weist in etwa die Form eines Kreissegmentes auf. Eine derartige Formgebung von Flächengebilden ist bei den genannten Seitenfenstern des Kraftfahrzeugs üblich.

Der zur Aufnahme des Flächengebildes vorgesehene Hauptkörper 22, der in Fig. 2 separat dargestellt ist, ist an diese Formgebung des Flächengebildes angepasst und als metallisches Hohlrohr mit sich verjüngendem Außendurchmesser ausgebildet. Dieser Außendurchmesser 24 weist sein Maximum an einem ersten Ende 22a auf und verjüngt sich von dort kontinuierlich bis zu einem gegenüberliegenden zweiten Ende 22b. Der Innendurchmesser 26 des Hauptkörpers 22 verjüngt sich ebenfalls, jedoch in noch stärkerem Maße, so dass die Wandungsdicke im Bereich des ersten Endes 22a deutlich geringer ist als am gegenüberliegenden Ende 22b. Hierdurch wird erreicht, dass die Massenverteilung des aus Aluminium gefertigten Hauptkörpers 22 entlang der Mittelachse 2 im Wesentlichen gleichbleibend ist. Der hinsichtlich seines Außendurchmessers vergrößerte Teil in Richtung des Endes 22a weist also keine entsprechend des vergrößerten Außendurchmessers erhöhte Masse bezogen auf eine definierte Längeneinheit in Richtung der Mittelachse 2 auf.

Wie sich aus Fig. 1 ergibt, sind die beiden Stirnenden des vorzugsweise etwa zwischen 20 cm und 50 cm langen Hauptkörpers 22, dessen Öffnungswinkel vorzugsweise größer als 0° und kleiner als 10° ist, mittels der genannten Endkappen 28 verschlossen. In diesen Endkappen 28 sind Lagerbohrungen 28a vorgesehen, durch die fahrzeugfest vorgesehenen Achsstummel 40 hindurchragen. Während der Achsstummel 40 auf der verjüngten Seite 22b lediglich eine Lagerfunktion hat, kommt dem Achsstummel 40 auf der gegenüberliegenden Seite 22a auch noch die Funktion als Widerlager einer Wickelfeder 50 zu. Diese Wickelfeder ist mit ihrem einen Ende am Achsstummel 40 befestigt. Das gegenüberliegende Ende ist in einer Aussparung des Hauptkörpers 22 eingesetzt, so dass die Wickelfeder 50 beim Abwickeln des Flächengebildes 30 tordiert wird.

Zur Herstellung der Wickelwelle, insbesondere des Hauptkörpers, wird zunächst ein zylindrisches Metallrohr als Ausgangswerkstück verwendet, welches einen Außendurchmesser aufweist, der dem Außendurchmesser am Ende 22a des Hauptkörpers entspricht oder demgegenüber noch größer ist. Dieses zylindrische Rohr wird durch radial in Richtung der Mittelachse 2 bewirkte Schläge verjüngt, wobei diese vorzugsweise automatisiert von einem Werkzeug erzeugten Schläge umfänglich über das zylindrische Metallrohr verteilt werden. Vorzugsweise wird zu diesem Zweck das zylindrische Metallrohr während seiner Bearbeitung und der damit einhergehenden Verjüngung gedreht und insbesondere vorzugsweise dabei kontinuierlich oder Schrittweise axial weiterbewegt. Diese Herstellungsmethode führt, ohne dass hierfür weitere Maßnahmen erforderlich wären, zu der größeren Wandungsstärke, die am Ende 22b gegenüber dem Ende 22a gegeben ist.

## Patentansprüche

1. Rollosystem (10) mit
- einer um eine Wickelwellenachse (2) drehbar gelagerten Wickelwelle (20),
- einem flexiblen Flächengebilde (30, 30a), welches mit einer Kante an der Wickelwelle (20) befestigt ist,
wobei die Wickelwelle einen Hauptkörper (22) zur aufgerollten Aufnahme des von der Wickelwelle (20) abziehbaren Flächengebildes (30, 30a) aufweist, der bezogen auf eine Wickelwellenachse (2) eine konusabschnittsförmige Formgebung aufweist,
**dadurch gekennzeichnet dass**
der Hauptkörper (22) als konusabschnittsförmiges Metallhohlteil (22) ausgebildet ist, dessen Wandungsstärke des Hauptkörpers (22) entlang der Richtung der Wickelwellenachse (2) variiert, wobei die Wandungsstärke sich von einem ersten Ende (22a) des Hauptkörpers (22) mit größerem Außendurchmesser zu einem zweiten Ende (22b) des Hauptkörpers (22) mit einem geringeren Durchmesser hin vergrößert.

2. Rollosystem (10) nach Anspruch 1,
**dadurch gekennzeichnet, dass**
der Hauptkörper (22) aus Aluminium oder einer Aluminiumlegierung besteht.

3. Rollosystem (10) nach einem der vorstehenden Ansprüche, **dadurch gekennzeichnet, dass**
die konusabschnittsförmige Formgebung des Hauptkörpers (22) ausgehend von einem zylindrischen Metallrohr mittels eines Umformverfahrens erzeugt ist, vorzugsweise mittels eines Warmumformverfahrens und/oder vorzugsweise durch in Richtung auf eine Mittelachse des Metallrohrs ausgeführte Schläge mit einem Hammer.

4. Rollosystem (10) nach einem der vorstehenden Ansprüche,
**dadurch gekennzeichnet, dass**
innerhalb der Wickelwelle (20) eine Wickelfeder (50) aufgenommen ist, wobei dese Wickelfeder (50) gegenüber einer Mitte der Wickelwelle hin zu der Seite (22a) mit größerem Außendurchmesser versetzt angeordnet ist.

5. Fahrzeug mit einem Rollosystem (10), insbesondere einem Beschattungs-Rollosystem (10),
**dadurch gekennzeichnet, dass**
das Rollosystem (10) nach einem der vorstehenden Asnprüche ausgebildet ist.

## Claims

1. Roller blind system (10), comprising
- a winding shaft (20) rotatably mounted about a winding shaft axis (2),
- a flexible planar structure (30, 30a), one edge of which is fastened to the winding shaft (20),
wherein the winding shaft has a main body (22) for holding a rolled-up planar structure (30, 30a) that can be unwound from the winding shaft (20), said main body having a design in the shape of a partial cone in relation to a winding shaft axis (2),
**characterized in that**
the main body (22) is formed as a hollow metal component (22) with the shape of a partial cone, the wall thickness of the main body (22) varies along the direction of the winding shaft axis (2), wherein the wall thickness increases from a first end (22a) of the main body (22) having a greater external diameter towards a second end (22b) of the main body (22) having a smaller diameter.

2. Roller blind system (10) according to claim 1, **characterized in that** the main body (22) consists of aluminium or of an aluminium alloy.

3. Roller blind system (10) according to any of the preceding claims, **characterized in that** the design of the main body (22) in the shape of a partial cone is produced starting from a cylindrical metal tube by means of a forming process, preferably by means of a hot-forming process and/or preferably through blows made with a hammer in the direction towards a central axis of the metal tube.

4. Roller blind system (10) according to any of the preceding claims, **characterized in that** a coil spring (50) is accommodated inside the winding shaft (20), wherein said coil spring (50) is arranged, relative to a centre of the winding shaft, offset towards the side (22a) with the greater external diameter.

5. Vehicle with a roller blind system (10), in particular a roller blind system for shading (10), **characterized in that** the roller blind system (10) is configured according to any of the preceding claims.

## Revendications

1. Système de store (10) avec
- un arbre enrouleur (20) pivotant autour d'un axe d'arbre enrouleur (2),
- une structure plane flexible (30, 30a), dont un bord est attaché à l'arbre enrouleur (20),
dans lequel l'arbre enrouleur comprend un corps principal (22) pour logement de la structure plane (30, 30a) déroulable de l'arbre enrouleur (20) dans un état enroulé, et le corps principal présente une configuration sous forme de section de cône par rapport à un axe d'arbre enrouleur (2),
**caractérisé en ce que**
le corps principal (22) est conçu comme composant creux métallique (22) sous forme de section de cône, dont l'épaisseur de paroi du corps principal (22) varie le long de la direction de l'axe d'arbre enrouleur (2), dans lequel l'épaisseur de paroi augmente d'une première extrémité (22a) du corps principal (22) présentant un diamètre extérieur supérieur vers une deuxième extrémité (22b) du corps principal (22) présentant un diamètre inférieur.

2. Système de store (10) selon la revendication 1, **caractérisé en ce que** le corps principal (22) se compose d'aluminium ou d'un alliage d'aluminium.

3. Système de store (10) selon l'une quelconque des revendications précédentes, **caractérisé en ce que** la configuration sous forme de section de cône du corps principal (22) est produit à partir d'un tube en métal cylindrique utilisant un procédé de déformation, de préférence utilisant un procédé de déformation à chaud et/ou des coups de marteau exécutés de préférence vers la direction d'un axe central du tube métallique.

4. Système de store (10) selon l'une quelconque des revendications précédentes, **caractérisé en ce qu'**un ressort enrouleur (50) est logé à l'intérieur de l'arbre enrouleur (20), dans lequel ledit ressort enrouleur (50) est décalé, par rapport à un centre de l'arbre enrouleur, vers le côté (22a) de diamètre extérieur supérieur.

5. Véhicule comprenant un système de store (10), en particulier un système de store d'ombrage (10), **caractérisé en ce que** le système de store (10) est conçu selon l'une quelconque des revendications précédentes.
